# EUROPÄISCHE PATENTSCHRIFT

(11) **EP 2 379 290 B1**
(45) Veröffentlichungstag und Bekanntmachung des Hinweises auf die Patenterteilung: **31.07.2013**
(21) Anmeldenummer: 10702394.7
(22) Anmeldetag: 06.01.2010
(51) Int. Cl.: B27G 13/04, B23C 5/04, B23C 5/22

(54) **FRÄSWERKZEUG UND SCHNEIDELEMENT FÜR EIN FRÄSWERKZEUG**
MILLING TOOL AND CUTTING ELEMENT FOR A MILLING TOOL
OUTIL DE FRAISAGE ET ÉLÉMENT DE COUPE POUR UN OUTIL DE FRAISAGE

(30) Priorität: 21.01.2009 DE 102009005634
(43) Veröffentlichungstag der Anmeldung: 26.10.2011
(73) Patentinhaber: Leitz GmbH & Co. KG, 73447 Oberkochen (DE)
(72) Erfinder: KISSELBACH, Andreas, 73431 Aalen (DE); GRAEF, Jürgen, 73447 Oberkochen (DE); EHRENSPERGER, Heiko, 73457 Essingen (DE)
(74) Vertreter: Rehmann, Thorsten
(86) Internationale Anmeldenummer: PCT/DE2010/000004
(87) Internationale Veröffentlichungsnummer: WO 2010/083799

(56) Entgegenhaltungen:
- WO-A1-2006/061817
- DE-A1- 4 423 861
- GB-A- 2 057 940
- US-A- 5 924 826
- US-B1- 6 659 694

## Beschreibung

Die Erfindung betrifft ein Fräswerkzeu, gemäß dem Oberbegriffs des Anspruchs 1, zur Bearbeitung nicht metallischer Werkstoffe, insbesondere Holz, Holzwerkstoff und Kunststoff, mit einem Tragkörper, einer Mehrzahl darin umfangsseitig in eine entsprechende Anzahl sich in radiale Richtung erstreckenden Ausnehmungen einsetzbarer, über eine Bohrung mit dem Tragkörper verschraubbarer Schneidelemente, die plattenförmig und im Querschnitt im Wesentlichen dreieckförmig ausgebildet und an einer Schneidkante mit einer Schneide versehen sind.

Die Erfindung betrifft auch ein Schneidelement für ein Fräswerkzeug mit den Merkmalen des Oberbegriffs von Patentanspruch 15.

Ein solches Fräswerkzeug und ein hiermit verwendbares Schneidelement sind beispielsweise aus der EP 0 861 144 B1 oder der US 6,659,694 B1 bekannt.

Bei den bekannten Werkzeugen werden einzelne Schneidelemente durch eine zentrale Schraube tangential zur Mantelfläche des Tragkörpers in einer Ausnehmung befestigt, die so ausgeführt ist, dass das Schneidelement mit seinen Außenkanten (Umfangswandung) an drei Stellen in der Ausnehmung anliegt und gegen die einwirkenden Schnittkräfte abgestützt wird. Die einzelnen Schneidelemente sind so angeordnet, dass die Einzelschneiden im Werkzeugtragkörper eine durchgehende Schneidspirale bilden.

Um die Randschneiden mit einem Achswinkel zur Werkzeugmittelebene hin befestigen zu können, muss der Tragkörper über den Schneidenbereich des Schneidelementes hinaus ausgebildet sein, damit genügend Bauraum für die Ausnehmung zur Aufnahme des Randschneidelementes vorhanden ist. Weil die Schneidelemente so in ihren zugehörigen Ausnehmungen positioniert werden sollen, dass sie gegen einwirkende Schnittkräfte abgestützt sind, muss der Tragkörper die Randschneidelemente folglich umschließen, also über das Schneidelement hinausreichen. Um eine hohe Rundlaufgenauigkeit und eine exakte Fluchtung der nebeneinander liegenden Schneidelemente in einer durchgehenden Spirale zu erreichen, müssen die Außenkanten der Schneidelemente (Anlageflächen) hoch genau geschliffen sein oder die Schneidkanten als Ganzes im eingebauten Zustand der Schneidelemente im Tragkörper durchgehend geschliffen werden.

In der Zeitschrift "HOB 05/2008, Seite 72" wird ein Fräswerkzeug mit einem Tragkörper aus Leichtmetall offenbart, bei dem die Schneidelemente ebenfalls über eine zen-trale Bohrung in im Wesentlichen radialer Richtung verschraubt sind. Die Schneidelemente sind auch hier in einer Ausnehmung positioniert, die das Schneidelement seitlich an einer Außenkante ausrichtet. Das Fräswerkzeug zeigt Schneidelemente mit Achswinkeln, die einen ziehenden Schnitt zur Werkzeugmittelebene hin bewirken. Um die Schneidelemente möglichst nahe am Rand des Tragkörpers positionieren zu können, sind die Schneidelemente nicht symmetrisch aufgebaut, sondern es werden "rechte" und "tinke" Schneidelemente unterschieden. Der Tragkörper umschließt die Randschneidelemente an der Außenseite. Damit ist die Werkzeugbreite wesentlich größer als die eigentliche Schnittbreite, die mit dem Werkzeug realisiert werden kann. Die Abstützung der Schneidelemente gegen die Schnittkräfte erfolgt allein durch Reibungskräfte der Schraubenvorspannung. Im Bereich der Schneiden weist der Tragkörper keine Spanräume zur Aufnahme des Spangutes auf. Damit sich die Einzelschneiden nicht als Spuren auf dem Werkstück abzeichnen, müssen die Schneidkanten im eingebauten Zustand fertig geschliffen werden.

Es hat sich als vorteilhaft erwiesen, den Werkzeugtragkörper solcher Fräswerkzeuge möglichst zylindrisch auszuführen, um eine lärmarme Gestaltung zu erreichen, und außerdem die Schneiden nur gering über die Mantelfläche des Tragkörpers hervorstehen zu lassen sowie schmale, tiefe Spanräume zur Aufnahme des Spangutes während des Schnittvorganges vorzusehen. Derart lärmgeminderte Werkzeuge haben bei gleichem Schneidenflugkreisdurchmesser aufgrund des höheren Materialeinsatzes ein höheres Gewicht als konventionelle Fräswerkzeuge und sind aufgrund des geringen Schneidenüberstandes weniger häufig nachschärfbar. Insbesondere bei kleineren, leicht gebauten Maschinen wirkt sich die große Masse des Werkzeuges nachteilig auf die Bearbeitungsqualität und die Standwege aus, was auf das Schwingungsverhalten zurückzuführen ist.

Aus der EP 0 688 638 B1 ist ein Fräswerkzeug mit Schneidelementen bekannt, die speziell so ausgestaltet sind, dass sie seitlich über den Fräskörper hervorstehen, wodurch die Bearbeitung von Falzen oder Nuten ermöglicht wird. Die seitliche Positionierung der Schneidelemente erfolgt über die Innenkontur einer an der Auflagefläche im Schneidelement angeordneten Rille, die mit der Mantelfläche eines im Tragkörper angeordneten Schwerspannstiftes in federnder Berührung steht. Weil das Schneidelement an beiden Nutflanken der durchgehend über die gesamte Messerhöhe verlaufenden und trapezförmig ausgebildeten Nut und an seiner Rückenfläche anliegt, ist das System an sich überbestimmt, was durch den federnden Schwerspannstift ausgeglichen werden soll. Durch diese Ausgestaltung leidet jedoch die Positioniergenauigkeit, was zu einer schlechten Wiederholgenauigkeit der Positionierung der Schneiden bei mehrmaligem Einbau führt.

Von dieser Problemstellung ausgehend, soll das eingangs beschriebene Fräswerkzeug so fortgebildet werden, dass bei vorgegebenem Schneidenflugkreisdurchmesser der Lärm gemindert und das Gewicht reduziert wird und der in einer Bearbeitungsmaschine nur begrenzt zur Verfügung stehende Bauraum optimal ausgenutzt wird.

Zur Problemlösung ist ein gattungsgemäßes Fräswerkzeug mit den Merkmalen des Anspruchs 1.

Durch diese Ausgestaltung erfolgt die seitliche Positionierung der Schneidelemente nicht über die Außenkontur, sondern über eine zentrale Nut. Dadurch ist es möglich, die Schneidelemente unabhängig von ihrem Achswinkel seitlich bündig mit dem Tragkörper abschließen oder über ihn hinausragen zu lassen.

Vorzugsweise hat das Schneidelement an seiner Umfangswandung nur einen Kontaktbereich mit der Umfangswandung der Ausnehmung. Alternativ kann vorgesehen sein, dass das Schneidelement vorzugsweise an seiner Umfangswandung zwei Kontaktbereiche mit der Umfangswandung der Ausnehmung aufweist.

Wenn das Schneidelement zur Längsachse der Nut spiegelsymmetrisch ausgebildet ist, ist nicht nur seine Herstellung, sondern auch die Montage in den Tragkörper vereinfacht.

Die Nut erstreckt sich vorzugsweise über die volle Länge der Unterseite des Schneidelementes.

Um die Positioniergenauigkeit zu vereinfachen kann der Kontakt des Schneidelementes an seinem der Schneide gegenüberliegenden Bereich mit der Ausnehmung vorzugsweise linienförmig sein. Hierzu ist es vorteilhaft, wenn die Wandung der Ausnehmung im Kontaktbereich plan (gerade bzw. eben) ausgebildet ist. Durch die Verbindung mit der Rundung des Schneidelementes wird dadurch ein definierter Linienkontakt eingestellt. Über diesen Linienkontakt erfolgt die Positionierung des Schneidelementes senkrecht zur Schneidkante. Im übrigen Bereich der Ausnehmung ist kein Kontakt mit der Umfangswandung des Schneidelementes vorgesehen. Die seitliche Positionierung des Schneidelementes erfolgt über eine Seitenwand des Steges in der Ausnehmung. Die Nut in dem Schneidelement und der Steg in der Ausnehmung des Tragkörpers sind mit geringem Spiel im Bereich weniger hundertstel Millimeter ausgeführt.

Der Tragkörper besteht vorzugsweise aus Leichtmetall. Insbesondere vorzugsweise aus Aluminium.

Wenn die Gewindebohrung in der Ausnehmung leicht exzentrisch angeordnet ist, wird das Schneidelement beim Anziehen der zentralen Befestigungsschraube automatisch gegen die hintere Anlage und gegen eine der Stegseiten gedrückt.

Die Exzentrizität der Gewindebohrung liegt dann vorzugsweise in einem Bereich zwischen 0,02 und 0,2 Millimeter.

Zumindest die Schneiden im Randbereich des Tragkörpers werden zur Erzeugung von Druckkräften auf ein Werkstück unter einem Achswinkel in den Tragkörper eingesetzt. Die Anlagefläche an der Stegseite wird je nach Achswinkel der Schneide stets so gewählt, dass das Schneidelement immer gegen die einwirkenden Schnittkräfte abgestützt wird. Damit gibt es nur ein Schneidelement unabhängig für welche Art von Achswinkeln es vorgesehen ist. Durch die zentrale seitliche Positionierung mittels Nut und Steg kann die Ausnehmung im Tragkörper seitlich geöffnet werden und das Schneidelement bündig oder überstehend zum Tragkörper eingebaut werden, unabhängig davon, in welcher Richtung der Achswinkel vorgesehen ist.

Vorzugsweise ist die Mehrzahl Schneidelemente so angeordnet, dass sie bei einer Rotation des Tragkörpers eine konvexe Hüllkurve erzeugen, aus der eine (leicht) konkave Oberfläche im bearbeiteten Werkstück resultiert, und insbesondere vorzugsweise ist in Drehrichtung betrachtet, vor jedem Schneidelement je ein Spanraum vorgesehen sowie ein zum Einsatz in dieses Fräswerkzeug geeignetes Schneidelement.

Ein Schneidelement für ein Fräswerkzeug zur Bearbeitung nicht metallischer Werkstoffe mit einem zu einer Symmetrielinie symmetrischen, plattenförmigen Grundkörper, einer am Grundkörper vorgesehenen Schneide und einer Befestigungsbohrung zeichnet sich zur Problemlösung dadurch aus, dass die Merkmale des Anspuchs 15 aufweist.

Vorzugsweise wird die Nut von der Befestigungsbohrung in zwei Bereiche unterteilt. Wenn sich die Nut über die volle Länge der Unterseite erstreckt, wird die Fertigung und insbesondere auch die Montage des Schneidelementes im Fräswerkzeug vereinfacht.

Der Grundkörper besteht vorzugsweise aus einem Sinterwerkstoff, beispielsweise Hartmetall. Die Schneide kann einstückig mit dem Grundkörper ausgebildet sein und aus demselben Werkstoff bestehen wie der Grundkörper. Vorzugsweise besteht die Schneide aber aus einem härteren Material als der Grundkörper, insbesondere vorzugsweise aus einem polykristallinen Diamant. In diesem Fall ist die Schneide dann stoffschlüssig mit dem Grundkörper verbunden, beispielsweise durch Hartlöten oder Kleben.

Um die Nachschleifbarkeit der Schneide zu gewährleisten, steht diese vorzugsweise über die Oberseite des Grundkörpers hervor.

Um die Herstellkosten zu reduzieren ist vorzugsweise nur die Unterseite des Grundkörpers geschliffen, um eine plane Auflage des Schneidelementes in der Ausnehmung des Tragkörpers des Fräswerkzeuges zu gestatten.

Die Befestigungsbohrung ist vorzugsweise mit einer konischen Senkung ausgeführt, die insbesondere konvex gekrümmt sein kann.

Der der Schneide gegenüberliegende gerundete Bereich des Schneidelementes weist vorzugsweise einen konstanten Radius auf. Der Radius ist vorzugsweise konzentrisch zur Befestigungsbohrung angeordnet.

Mit Hilfe einer Zeichnung sollen Ausführungsbeispiele der Erfindung nachfolgend näher erläutert werden.

Es zeigt:
- Figur 1: die perspektivische Darstellung eines erfindungsgemäßen Fräswerkzeuges;
- Figur 2: die perspektivische Darstellung eines erfindungsgemäßen Schneidelementes;
- Figur 3: einen Schnitt entlang der Symmetrielinie des Schneidelementes nach Figur 2;
- Figur 4: die Ansicht des Schneidelementes gemäß Sichtpfeil IV nach Figur 2;
- Figur 5: die Ansicht des Schneidelementes gemäß Sichtpfeil V nach Figur 2;
- Figur 6: die Ansicht des Schneidelementes gemäß Sichtpfeil VI nach Figur 5;
- Figur 7: einen Teilschnitt durch ein erfindungsgemäßes Fräswerk zeug;
- Figur 8: die Schneidengeometrie eines Schneidelementes;
- Figur 9: das Schneidenprofil eines Schneidelementes;
- Figur 10: die Explosionsdarstellung des Schneidelementes und der Aufnahme im Tragkörper einer ersten Ausführungsform;
- Figur 11: die Explosionsdarstellung des Schneidelementes und der Aufnahme im Tragkörper einer zweiten Ausführungsform;
- Figur 12: die Explosionsdarstellung des Schneidelementes und der Aufnahme im Tragkörper einer dritten Ausführungsform;
- Figur 13: die Explosionsdarstellung des Schneidelementes und der Aufnahme im Tragkörper einer vierten Ausführungsform;
- Figur 14: die perspektivische Darstellung eines weiteren erfindungsgemäßen Schneidelementes.

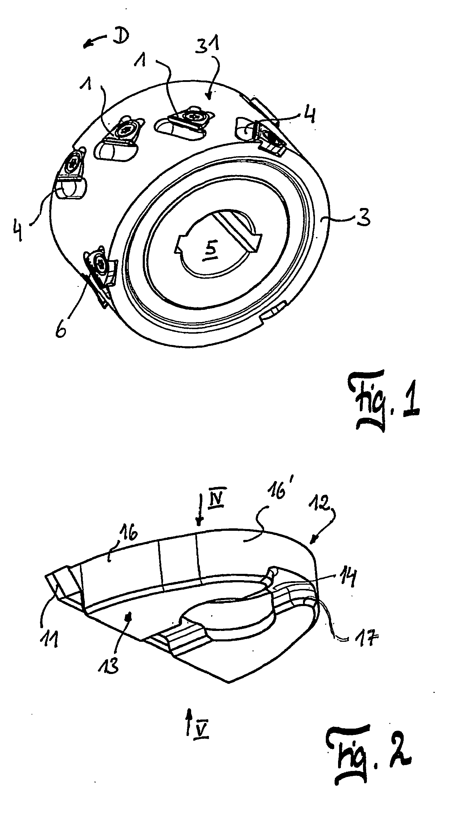

Das Fräswerkzeug besteht aus dem Tragkörper 3 mit den darin in Ausnehmungen 2 eingesetzten Schneidelementen 1, die über Senkschrauben 6 mit dem Tragkörper 3 verschraubt werden. Vor jedem Schneidelement 1 ist ein Spanraum 4 zur Aufnahme der bei der Bearbeitung von Werkstücken entstehenden Späne. Aus Figur 1 ist ersichtlich, dass die äußeren Schneidelemente 1 in axial offenen Ausnehmungen 2 angeordnet sind und an ihrer axial äußeren Umfangswandung nicht geführt werden. Die Schneidelemente 1 sind so angeordnet, dass sich aus den Einzelschneiden 11 eine spiralförmige Gesamtschneide ausbildet. Über die im Tragkörper 3 vorgesehene Axialbohrung 5 kann das Fräswerkzeug mit einer hier nicht näher dargestellten Antriebswelle eines Bearbeitungswerkzeuges verbunden werden.

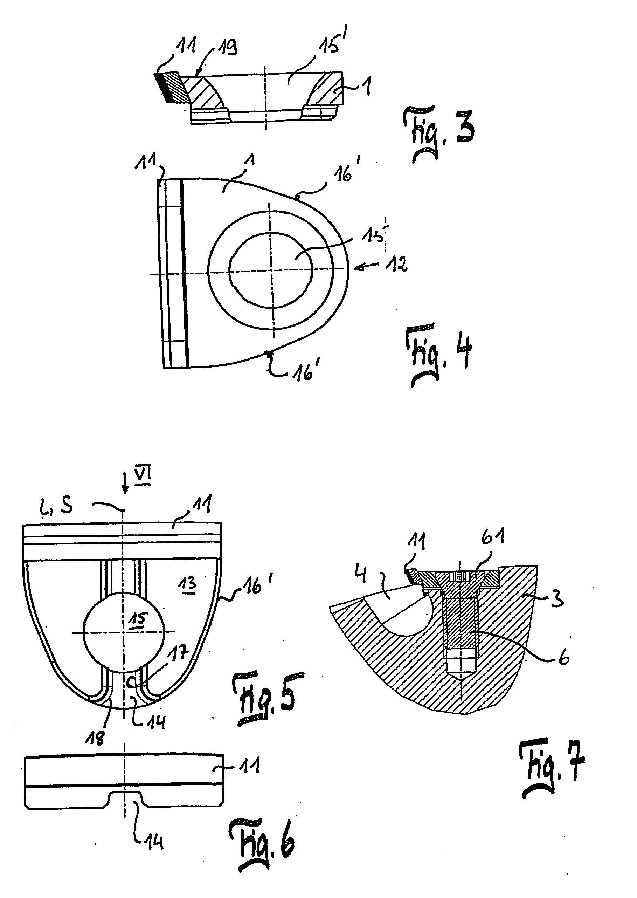

Jedes Schneidelement 1 hat eine symmetrische Form, die sich zu der der Schneide 11 (Schneidkante) gegenüberliegenden Seite hin verjüngt und im Wesentlichen dreieckförmig ausgebildet ist. Der der Schneide 11 gegenüberliegende Bereich 12 ist gerundet mit einem konstanten Radius ausgebildet und konzentrisch zur Befestigungsbohrung angeordnet. Zentral ist eine Senkbohrung 15 mit einem konischen Profilquerschnitt im Bereich der Ansenkung vorgesehen (vgl. Figuren 3, 4). Der konische Bereich 15' kann konvex ausgebildet sein, um eine definierte Linienanlage mit dem konischen Kopf 61 einer zu der Bohrung 15 korrespondierenden Senkschraube 6 herzustellen. Wie Figur 7 zeigt, endet die Schneide 11 in derselben radialen Höhe wie die Mantelfläche 31 des Tragkörpers 3. Es kann aber auch vorgesehen sein, dass die Oberseite 19 des Schneidelementes 1 bündig mit der Mantelfläche 31 des Tragkörpers 3 abschließt.

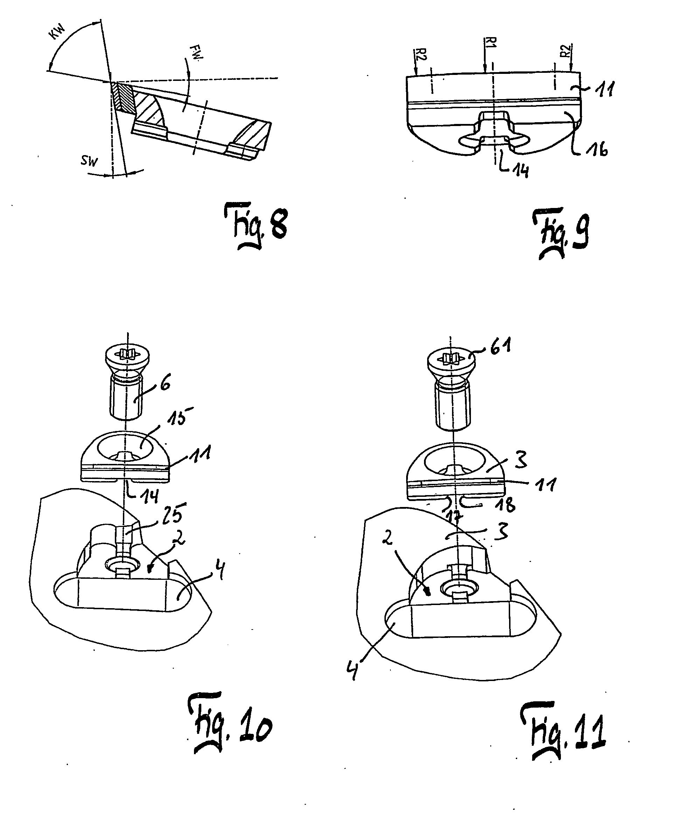

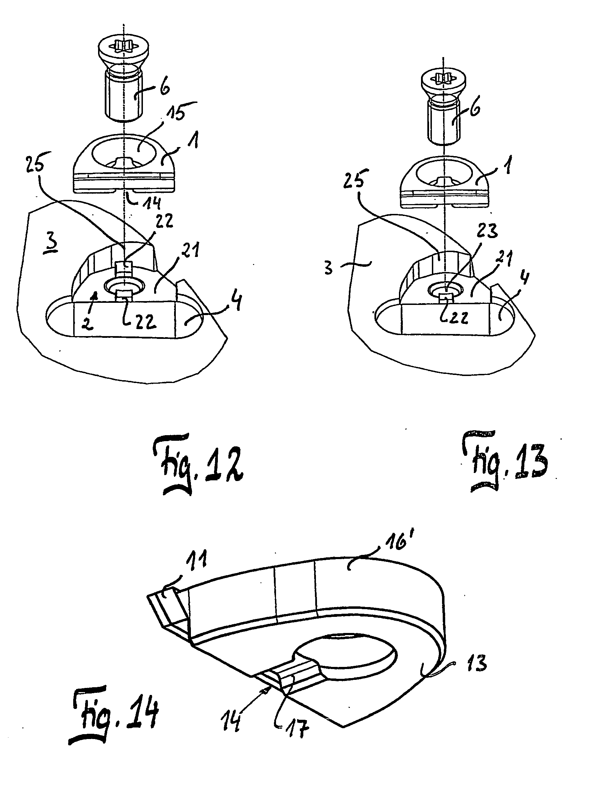

Die zentral in das spiegelsymmetrisch ausgestaltete Schneidelement 1 eingebrachte Bohrung 15 teilt die Nut 14 in zwei Bereiche. Im Tragkörper 3 ist eine zur Form des Schneidelementes 1 im Wesentlichen korrespondierende Ausnehmung 2 vorgesehen, die in der Mitte ihres als Auflagefläche dienenden Bodens 21 mindestens einen Steg 22 (vgl. Figur 13) aufweist. Außerdem ist im Boden 21 eine Gewindebohrung 23 vorgesehen, in die die Senkschraube 6 einschraubbar ist. Wie Figur 12 zeigt, können auch zwei Stege 22 vorgesehen sein, die durch die Gewindebohrung 23 voneinander getrennt sind. Das Schneidelement 1 liegt mit seiner Unterseite 13 flächig auf dem Boden 21 der Ausnehmung 2 auf. An seiner Umfangswandung 16' ist das Schneidelement 1 nur an der der Schneidkante 11 gegenüberliegenden Rundung 12 mit der Wandung 25 der Ausnehmung 2 in Berührung. In diesem Bereich ist die Wandung 25 der Ausnehmung 2 eben ausgebildet, wodurch in Verbindung mit der Rundung des Schneidelementes 1 ein definierter Linienkontakt entsteht. Über diesen Linienkontakt erfolgt die Positionierung des Schneidelementes 1 senkrecht zur Schneidkante 11. Im übrigen Bereich der Wandung 25 besteht kein Kontakt mit dem Schneidelement 1. Vielmehr ist ein Spalt vorgesehen. Die seitliche Positionierung des Schneidelementes 1 erfolgt über eine Seitenwand des Steges 22. Die Nut 14 im Schneidelement 1 und der Steg 22 in der Ausnehmung 2 des Tragkörpers 3 sind zueinander korrespondierend mit geringem Spiel im Bereich weniger hundertstel Millimeter ausgeführt. Die Gewindebohrung 23 ist in der Ausnehmung 2 nicht exakt zentrisch angeordnet, sondern dergestalt versetzt, dass das Schneidelement 1 beim Anziehen der zentralen Senkschraube 6 automatisch gegen die hintere Anlage (Wandung 25) und gegen eine der Seiten des Steges 22 gedrückt wird. Der Mittenversatz der Gewindebohrung 23 liegt im Bereich von 0,02 bis 0,2 Millimeter. Die Anlagefläche an der Seite des Steges 22 wird je nach Achswinkel der Schneide 11 stets so gewählt, dass das Schneidelement 1 bei der Bearbeitung immer gegen die einwirkenden Schnittkräfte abgestützt wird. Das heißt, unabhängig von der Art der Achswinkel existiert nur ein Schneidelement 1. Durch die zentrale seitliche Positionierung mittels Nut 14 und Steg 22 kann die Ausnehmung 2 im Tragkörper axial geöffnet werden (vgl. Figuren 10 bis 13 in Verbindung mit Figur 1), so dass das Schneidelement 1 bündig oder überstehend zum Tragkörper 3 eingebaut werden kann, unabhängig davon, in welche Richtung der Achswinkel vorgesehen ist.

Die Nut 14 und der Steg 22 sind durch die Bohrungen 15 und 23 in zwei Bereiche geteilt, so dass die seitliche Positionierung nicht über die gesamte Länge des Schneidelementes 1, sondern über zwei beabstandete kleinere Kontaktflächen erfolgt, was sich positiv auf die Positioniergenauigkeit auswirkt. Besonders vorteilhaft ist es, wenn die Seiten der beiden Stegbereiche konvex oder facettiert ausgebildet sind. Auf diese Weise wird ein Linienkontakt zu den Wandungen 17, 18 der Nut 14 bewirkt, wodurch die Positioniergenauigkeit weniger durch Verschmutzung beeinträchtigt wird.

Wenn das Schneidelement 1 als Sinterteil gefertigt wird, kann zur Reduzierung der Herstellkosten nur seine Unterseite 13 eben geschliffen werden. Um Gewichtsunterschiede gering zu halten, ist es vorteilhaft, zusätzlich auch die Oberseite 19 auf eine definierte Dicke zur Unterseite 13 zu schleifen. Alle übrigen Positionierflächen können eine sinterrohe Oberfläche behalten.

Dadurch, dass erfindungsgemäß der Abstand der beiden seitlichen Anlageflächen verringert wird, weil die seitliche Positionierung des Schneidelementes 1 über die Nut 14 erfolgt, wird die Positioniergenauigkeit erhöht. Der Abstand der Nutwandungen 17, 18 im Schneidelement 1 beträgt etwa nur 1/5 bis 1/6 des Abstandes von rechter zu linker Außenwandung. Dementsprechend verringert sich auch der Maßfehler auf 1/5 bis 1/6 gegenüber dem Maßfehler der Außenwandungen, so dass die Genauigkeit nach dem Sintern ausreicht und keine zusätzliche Schleifbearbeitung der Nut erfolgen muss. Für die Formgebung durch Pressen ist es vorteilhaft, wenn die Nutflanken um 5 bis 10 Grad geneigt sind. Auf diese Weise lässt sich das Pressteil besser ausformen und ist weniger rissanfällig beim Sintern.

Die Schneidkanten (Schneiden 11) der Schneidelemente 1 können im eingebauten Zustand im Tragkörper 3 fertig bearbeitet werden. Dies erfolgt entweder durch Erodieren (beispielsweise bei polykristallinem Diamant) oder durch Schleifen (z. B. bei Hartmetall). Durch das Schärfen im Tragkörper 3 wird die höchst mögliche Rundlaufgenauigkeit der Schneiden 11 erreicht. Bei dem erfindungsgemäßen Fräswerkzeug ist die Genauigkeit von Schneidelementen 1 und Ausnehmungen 2 im Tragkörper 3 so ausreichend hoch, dass die Schneiden 11 der Schneidelemente 1 außerhalb des Tragkörpers als Einzelteil fertig bearbeitet (geschärft) werden können. Die Schneidelemente 1 werden dazu in eine der Ausnehmung 2 entsprechende Vorrichtung (nicht gezeigt) gespannt und darin geschärft. Mögliche Maßabweichungen bei der Positionierung der Schneide 11 senkrecht zur Schneidkante (z. B. durch Lötfehler oder Sintertoleranzen) werden durch Antasten der Schneide von der Schärfmaschine erkannt und korrigiert. Für die seitliche Positionierung ist die Genauigkeit der Nut 14 so hoch, dass es sich auf das Fräsbild, das mit dem fertigen Werkzeug erzielt wird, nicht auswirkt, ob das Schneidelement 1 in der Ausnehmung 2 des Tragkörpers 3 rechts oder links angeschlagen wird. Dadurch kann das gesamte Werkzeug mit einer einzigen Schneidentype versehen werden.

Auf diese Weise wird ein Austauschsystem erreicht, bei dem verschlissene oder beschädigte Schneiden ausgetauscht werden können, ohne das Werkzeug zu einem Ser-vicedienst schicken zu müssen. Der Tragkörper 3 kann immer beim Anwender verbleiben. Verschickt und/oder nachgeschärft werden müssen nur die Schneidelemente 1. Die Bevorratung mit Ersatzwerkzeugen kann entfallen. Bevorratet werden müssen nur Ersatzschneiden.

Bei Werkzeugen, deren Gesamtschnittbreite größer als die Schnittbreite eines Schneidelementes 1 ist, sind die Schneidelemente 1 so im Tragkörper angeordnet, dass sich ihre Frässpuren am Werkstück seitlich aneinanderreihen und geringfügig überdecken, so dass eine ebene Fläche am Werkstück erzielt wird. In bestimmten Anwendungen ist es vorteilhaft, wenn am Werkstück eine konkave Oberfläche im Hunderstel-MillimeterBereich erzeugt wird, etwa um sicherzustellen, dass beim Anleimen eines Kantenbandes an die Schmalfläche eines plattenförmigen Bauteiles eine dichtschließende Leimfuge erreicht wird. Auch für solche Fügewerkzeuge, die einen definierten Hohlschnitt am Werkstück von einigen Hunderstel-Millimetern erzeugen sollen, ist nur eine Schneidplattentype vorgesehen. Das konvexe Schneidenprofil des Gesamtwerkzeuges wird dadurch erreicht, dass die Ausnehmungen 4 im Tragkörper 3 in ihrer Lage so angeordnet sind, dass die Hüllkurve der nebeneinander liegenden Schneiden 11 den geforderten Hohlschnitt ergeben. Um bei gegebenem Achswinkel eine ebene Fläche zu fräsen, muss die Schneidkante 11 geringfügig konvex mit einem sehr großen Radius R₁ profiliert werden. Zum Vermeiden scharfkantiger Abzeichnungen nebeneinander liegender Schneiden auf der gefrästen Werkstückoberfläche läuft das Schneidenprofil im Überlappungsbereich mit einem kleineren Radius R₂ aus (vgl. Figur 9).

Damit das Schneidelement 1 in der korrespondierenden Ausnehmung 2 des Tragkörpers 3 möglichst bündig mit der Außenfläche (Mantelfläche 31) des Tragkörpers 3 abschließt, muss es möglichst tangential eingebaut werden. Hierzu weist das Schneidelement 1 an der Seite der Schneide 11 einen schrägen Bereich auf, der so ausgebildet ist, dass er selbst die Schneidkante bildet oder dass an ihm eine Schneide (z. B. aus polykristallinem Diamant) aufgelötet wird. Der Winkel des schrägen Bereiches zur Auflagefläche des Schneidelementes 11 entspricht im Wesentlichen dem Spanwinkel SW im eingebauten Zustand (vgl. Figur 8). Beim Einbau der Schneidelemente 1 in den Tragkörper 3 unter einem Achswinkel verändert sich der Spanwinkel SW dergestalt, dass er zur nacheilenden Schneide hin zunimmt. Die Freifläche kann prinzipiell nach zwei Systemen hergestellt werden. Entweder mit einem konstanten Freiwinkel FW oder einem konstanten Keilwinkel KW. Die Ausführung mit konstantem Freiwinkel FW bewirkt konstante Reibverhältnisse über die gesamte Schnittbreite, führt aber zu "rechten" und "linken" Schneiden je nach Lage des Achswinkels. Bevorzugte Ausführung ist deshalb ein Schneidelement 1 mit einem konstanten Keilwinkel KW. Das hat den Vorteil, dass unabhängig vom Achswinkel nur ein Typ Schneidelement 1 zum Einsatz kommen kann, was allerdings voraussetzt, dass der Freiwinkel FW im Bereich der nacheilenden Schneide nicht so klein wird, dass die Schneide zu stark reibt und dadurch verharzt oder brennt.

Beim Einbau eines Schneidelementes 1 unter einem Achswinkel werden die auf die Schneide 11 einwirkenden Schnittkräfte in verschiedene Komponente zerlegt. Senkrecht zur Schneidkante wirkt eine Normalkraft. In Richtung der Schneidkante wird durch Reibung eine Passivkraft erzeugt. Zusätzlich wird, da der Kraftangriffspunkt der Schnittkraft seitlich versetzt zur Mitte der Schraube 6 liegt, ein Moment um den Befestigungspunkt erzeugt. Aus fertigungstechnischen Gesichtspunkten wird deshalb eine Ausführung der Ausnehmung 2 im Tragkörper 3 gemäß der Figur 10 bevorzugt. Bei dieser Ausführungsform stehen die Anlagenflächen zur Positionierung des Schneidelementes 1 senkrecht zueinander, wodurch sich die Maßhaltigkeit einfacher nachprüfen lässt. Die Abstützung des Schneidelementes 1 gegen das Moment erfolgt bei dieser Ausführungsform allein durch die Reibkräfte der Schraubenklemmung. Für die meisten Anwendungen ist diese Ausführung ausreichend.

Eine bessere Abstützung gegen Momente wird durch die Ausführungsform gemäß Figur 11 erreicht, bei der die Anlageflächen zur Positionierung des Schneidelementes 1 in einem spitzen Winkel zueinander stehen.

Wenn das Schneidelement 1 möglichst randnah zum Tragkörper 3 positioniert werden soll, ist eine Ausführung gemäß Figur 12 vorteilhaft, bei der die hintere Anlagefläche "innen liegend" angeordnet ist und so den Tragkörper 3 nicht unnütz verbreitert. Die Gewindebohrung 23 ist dabei die seitliche Begrenzung des Tragkörpers 3. Auch hier wird das Moment über Reibkräfte aufgenommen.

Besonders vorteilhaft gegen große, auf das Schneidelement 1 wirkende Momente, die zu einer Verdrehung führen können, ist eine Ausführung der Ausnehmung 2 im Tragkörper 3 gemäß Figur 13, bei der der hintere Anschlag prismatisch als Zentrierung ausgeführt ist und der Steg 22 in der Ausnehmung 2 nur vorn an der Schneide 11 als Momentenstütze dient.

Figur 14 zeigt eine Ausführungsform des Schneidelementes 1, das in die Ausnehmung 2 gemäß Figur 13 eingesetzt werden kann. Hier ist es nicht notwendig, dass die Nut 14 über die volle Länge der Unterseite 13 reicht.

### Bezugszeichenliste

- 1: Schneidelement
- 2: Ausnehmung
- 3: Tragkörper
- 4: Spanraum
- 5: Axialbohrung
- 6: Senkschraube
- 11: Schneide
- 12: hinterer Bereich/Rundung
- 13: Unterseite
- 14: Nut
- 15: Bohrung
- 15': Konus
- 16: Grundkörper
- 16': Umfangswandung
- 17: Wandung
- 18: Wandung
- 19: Oberseite
- 21: Boden
- 22: Steg
- 23: Gewindebohrung
- 25: Wandung
- 31: Mantelfläche
- 61: Kopf
- D: Drehrichtung
- FW: Freiwinkel
- KW: Keilwinkel
- L: Längsachse
- R₁: Radius
- R₂: Radius
- S: Symmetrielinie
- SW: Spanwinkel

## Patentansprüche

1. Fräswerkzeug zur Bearbeitung nicht metallischer Werkstoffe, insbesondere Holz, Holzwerkstoff und Kunststoff, mit einem Tragkörper (3), einer Mehrzahl darin umfangsseitig in eine entsprechende Anzahl sich in radialer Richtung erstreckenden Ausnehmungen (2) einsetzbarer, über eine Bohrung (15) mit dem Tragkörper (3) verschraubbarer Schneidelemente (1), die plattenförmig und im Querschnitt im Wesentlichen dreieckförmig ausgebildet und an einer Seitenkante mit einer Schneide (11) versehen sind, wobei der der Schneide (11) gegenüberliegende Bereich (12) gerundet ist,
**gekennzeichnet durch** folgende Merkmale des Schneidelementes (1):
a) in der Unterseite (13) ist eine im Wesentlichen rechtwinklig zur Schneide (11) verlaufende Nut (14) vorgesehen,
b) die Bohrung (15) unterteilt die Nut (14) vorzugsweise in zwei Bereiche
und folgende Merkmale der Ausnehmung (2):
c) einen sich von ihrem als Auflagefläche für das Schneidelement (1) dienenden Boden (21) in radialer Richtung nach oben erstreckenden Steg (22), der zur Nut (14) korrespondiert, -
d) einer radialen Gewindebohrung (23), die vorzugsweise den Steg (22) in zwei Bereiche trennt,
und dass
e) das Schneidelement (1) nur mit seiner Unterseite (13), einer Seitenwandung (17 oder 18) der Nut (14) und einem Teil seines der Schneide (11) gegenüberliegenden, gerundeten Bereiches (12) Kontakt mit der Ausnehmung (2) hat.

2. Fräswerkzeug nach Anspruch 1, **dadurch gekennzeichnet, dass** das Schneidelement (1) an seiner Umfangswandung (16') nur einen Kontaktbereich mit der Umfangswandung (25) der Ausnehmung (2) aufweist.

3. Fräswerkzeug nach Anspruch 1, **dadurch gekennzeichnet, dass** das Schneidelement (1) an seiner Umfangswandung (16') zwei Kontaktbereiche mit der Umfangswandung (25) der Ausnehmung (2) aufweist.

4. Fräswerkzeug nach Anspruch 1, **dadurch gekennzeichnet, dass** das Schneidelement (1) zur Längsachse (L) der Nut (14) spiegelsymmetrisch ausgebildet ist.

5. Fräswerkzeug nach Anspruch 1 oder 4, **dadurch gekennzeichnet, dass** die Nut (14) über die volle Länge der Unterseite (13) reicht.

6. Fräswerkzeug nach einem der Ansprüche 2 bis 5, **dadurch gekennzeichnet, dass** der Kontakt der Umfangswandung (16') des Schneidelementes (1) an seinem der Schneide (11) gegenüberliegenden Bereich (12) mit der Ausnehmung (2) linienförmig ist.

7. Fräswerkzeug nach Anspruch 6, **dadurch gekennzeichnet, dass** die Wandung (25) der Ausnehmung (2) im Kontaktbereich plan oder eben ausgebildet ist.

8. Fräswerkzeug nach Anspruch 1, **dadurch gekennzeichnet, dass** der Tragkörper (3) aus Leichtmetall, insbesondere aus Aluminium besteht.

9. Fräswerkzeug nach einem oder mehreren der vorstehenden Ansprüche, **dadurch gekennzeichnet, dass** die Gewindebohrung (23) in der Ausnehmung (2) leicht exzentrisch angeordnet ist.

10. Fräswerkzeug nach Anspruch 9, **dadurch gekennzeichnet, dass** die Exzentrizität im Bereich von 0,02 bis 0,2 mm liegt.

11. Fräswerkzeug nach einem oder mehreren der vorstehenden Ansprüche, **dadurch gekennzeichnet, dass** zumindest die Schneiden (11) im Randbereich des Tragkörpers (3) zur Erzeugung von Druckkräften auf ein Werkstück unter einem Achswinkel in den Tragkörper (3) eingesetzt sind.

12. Fräswerkzeug nach einem oder mehreren der vorstehenden Ansprüche, **dadurch gekennzeichnet, dass** das Schneidelement (1) im Wesentlichen bündig mit einer Mantelfläche (31) des Tragkörpers (3) abschließt.

13. Fräswerkzeug nach Anspruch 1, **dadurch gekennzeichnet, dass** die Mehrzahl Schneidelemente (1) so angeordnet sind, dass sie bei einer Rotation des Tragkörpers (3) eine konvexe Hüllkurve erzeugen, aus der eine konkave Oberfläche im bearbeiteten Werkstück resultiert.

14. Fräswerkzeug nach Anspruch 1, **dadurch gekennzeichnet, dass** in Drehrichtung (D) betrachtet vor jedem Schneidelement (1) je ein Spanraum (4) vorgesehen ist.

15. Schneidelement für ein Fräswerkzeug zur Bearbeitung nicht metallischer Werkstoffe, das im Wesentlichen dreieckförmig ausgebildet ist, mit einem zu einer Symmetrielinie (S) symmetrischen, plattenförmigen Grundkörper (16), einer am Grundkörper (16) vorgesehenen Schneide (11), die von einer Unterseite (13) des Grundkörpers (16) beabstandet ist, und einer Befestigungsbohrung (15), wobei der der Schneide (11) gegenüberliegende Bereich (12) gerundet ist, **dadurch gekennzeichnet, dass**
a) in die Unterseite (13) eine im Wesentlichen senkrecht zur Schneide (11) verlaufende Nut (14) eingebracht ist,
b) die Längsachse (L) der Nut (14) mit der Symmetrielinie (S) zusammenfällt, und
c) die Schneidkante der Schneide (11) konvex gekrümmt ist und der Krümmungsradius (R₂) an den sich gegenüberliegenden Randbereichen abnimmt.

## Claims

1. Milling tool for machining nonmetallic materials, in particular wood, wood-based material and plastic, comprising a supporting body (3) and a plurality of cutting elements (1) which can be inserted therein circumferentially into a corresponding number of radially extending recesses (2) and can be screwed to the supporting body (3) via a hole (15) and which are of plate-like design and of substantially triangular design in cross section and are provided with a blade (11) at a side edge, the region (12) opposite the blade (11) being rounded,
**characterized by** the following features of the cutting element (1):
a) a groove (14) running substantially at right angles to the blade (11) is provided in the underside (13),
b) the hole (15) divides the groove (14) preferably into two regions,
and by the following features of the recess (2):
c) a web (22) which extends radially upward from the base (21) thereof, serving as seating surface for the cutting element (1), and corresponds to the groove (14),
d) a radial tapped hole (23) which preferably separates the web (22) into two regions,
and that
e) the cutting element (1) is in contact with the recess (2) only with the underside (13) thereof, a side wall (17 or 18) of the groove (14) and part of the rounded region (12) thereof opposite the blade (11).

2. Milling tool according to Claim 1, **characterized in that** the cutting element (1) has, at its circumferential wall (16'), only one region in contact with the circumferential wall (25) of the recess (2).

3. Milling tool according to Claim 1, **characterized in that** the cutting element (1) has, at its circumferential wall (16'), two regions in contact with the circumferential wall (25) of the recess (2).

4. Milling tool according to Claim 1, **characterized in that** the cutting element (1) is designed in mirror symmetry with respect to the longitudinal axis (L) of the groove (14).

5. Milling tool according to Claim 1 or 4, **characterized in that** the groove (14) extends over the full length of the underside (13).

6. Milling tool according to one of Claims 2 to 5, **characterized in that** the contact of the circumferential wall (16') of the cutting element (1) with the recess (2) at the region (12) thereof opposite the blade (11) is linear.

7. Milling tool according to Claim 6, **characterized in that** the wall (25) of the recess (2) in the contact region is designed to be plane or flat.

8. Milling tool according to Claim 1, **characterized in that** the supporting body (3) is made of light alloy, in particular aluminum.

9. Milling tool according to one or more of the preceding claims, **characterized in that** the tapped hole (23) in the recess (2) is arranged slightly eccentrically.

10. Milling tool according to Claim 9, **characterized in that** the eccentricity is within the range of 0.02 to 0.2 mm.

11. Milling tool according to one or more of the preceding claims, **characterized in that** at least the blades (11) in the edge region of the supporting body (3) are inserted into the supporting body (3) at a shear cut angle for producing pressure forces on a workpiece.

12. Milling tool according to one or more of the preceding claims, **characterized in that** the cutting element (1) terminates substantially flush with a lateral surface (31) of the supporting body (3).

13. Milling tool according to Claim 1, **characterized in that** the plurality of cutting elements (1) is arranged in such a way that, during a rotation of the supporting body (3), they produce a convex envelope curve from which a concave surface in the machined workpiece results.

14. Milling tool according to Claim 1, **characterized in that** one chip gullet (4) each is provided in front of each cutting element (1) as viewed in the direction of rotation (D).

15. Cutting element for a milling tool for machining nonmetallic materials, which cutting element is of substantially triangular design, comprising a plate-like parent body (16) symmetrical to a line of symmetry (S), a blade (11) provided on the parent body (16), which blade is at a distance from an underside (13) of the parent body (16), and a fastening hole (15), the region (12) opposite the blade (11) being rounded, **characterized in that**
a) a groove (14) running substantially at right angles to the blade (11) is incorporated into the underside (13),
b) the longitudinal axis (L) of the groove (14) coincides with the line of symmetry (S), and
c) the cutting edge of the blade (11) is convexly curved and the radius of curvature (R₂) decreases at the opposite edge regions.

## Revendications

1. Outil de fraisage pour l'usinage de matériaux non métalliques, en particulier du bois, un matériau dérivé du bois ou une matière plastique, comprenant un corps porteur (3), plusieurs éléments de coupe (1) qui peuvent y être insérés du côté périphérique dans un nombre correspondant d'évidements (2) s'étendant en direction radiale, et qui peuvent être vissés au corps porteur (3) par l'intermédiaire d'un alésage (15), les éléments de coupe étant réalisés en forme de plaquettes et sensiblement triangulaires en section transversale, et munis d'un tranchant (11) sur un bord latéral, la zone (12) opposée au tranchant (11) étant arrondie,
**caractérisé par** les particularités suivantes de l'élément de coupe (1) :
a) il est prévu dans la face inférieure (13) une rainure (14) s'étendant sensiblement perpendiculairement au tranchant (11),
b) l'alésage (15) subdivise la rainure (14) de préférence en deux zones,
et par les particularités suivantes de l'évidement (2) :
c) une nervure (22) correspondant à la rainure (14) et qui s'étend vers le haut en direction radiale à partir du fond (21) de l'évidement, ce fond servant de surface d'appui pour l'élément de couple (1),
d) un alésage taraudé radial (23) qui de préférence subdivise la nervure (22) en deux zones,
et en ce que :
e) l'élément de coupe (1) n'a de contact avec l'évidement (2) que par la face inférieure (13) de l'élément de coupe, une paroi latérale (17 ou 18) de la rainure (14) et une partie de sa région arrondie opposée au tranchant (11).

2. Outil de fraisage selon la revendication 1, **caractérisé en ce que** sur sa paroi périphérique (16'), l'élément de coupe (1) ne présente qu'une zone de contact avec la paroi périphérique (25) de l'évidement (2).

3. Outil de fraisage selon la revendication 1, **caractérisé en ce que** sur sa paroi périphérique (16'), l'élément de coupe (1) présente deux zones de contact avec la paroi périphérique (25) de l'évidement (2).

4. Outil de fraisage selon la revendication 1, **caractérisé en ce que** l'élément de coupe (1) est réalisé avec une symétrie miroir par rapport à l'axe longitudinal (L) de la rainure (14).

5. Outil de fraisage selon la revendication 1, **caractérisé en ce que** la rainure (14) s'étend sur toute la longueur de la face inférieure (13).

6. Outil de fraisage selon l'une ou plusieurs des revendications 2 à 5, **caractérisé en ce que** le contact de la paroi périphérique (16') de l'élément de coupe (1), en sa région opposée au tranchant (11), avec l'évidement (2), est linéaire.

7. Outil de fraisage selon la revendication 6, **caractérisé en ce que** la paroi (25) de l'évidement (2) est réalisée plane ou plate dans la région de contact.

8. Outil de fraisage selon la revendication 1, **caractérisé en ce que** le corps porteur (3) est réalisé en métal léger, en particulier en aluminium.

9. Outil de fraisage selon l'une ou plusieurs des revendications précédentes, **caractérisé en ce que** l'alésage taraudé (23) est disposé légèrement excentrique dans l'évidement (2).

10. Outil de fraisage selon la revendication 9, **caractérisé en ce que** l'excentricité est dans la plage allant de 0,02 à 0,2 mm.

11. Outil de fraisage selon l'une ou plusieurs des revendications précédentes, **caractérisé en ce qu'**au moins les tranchants (11) dans la zone de bord du corps porteur (3) sont insérés sous un angle axial dans le corps porteur (3) en vue de générer des forces pressantes sur une pièce d'oeuvre.

12. Outil de fraisage selon l'une ou plusieurs des revendications précédentes, **caractérisé en ce que** l'élément de coupe (1) se termine de façon sensiblement jointive avec une face périphérique (31) du corps porteur (3).

13. Outil de fraisage selon la revendication 1, **caractérisé en ce que** les plusieurs éléments de coupe (1) sont disposés de façon à générer lors d'une rotation du corps porteur (3) une courbe d'enveloppe convexe dont il résulte une surface concave dans la pièce d'oeuvre usinée.

14. Outil de fraisage selon la revendication 1, **caractérisé en ce qu'**il est prévu une chambre à copeaux (4) en avant, relativement à la direction de rotation (D), de chaque élément de coupe (1).

15. Élément de coupe pour un outil de fraisage, pour l'usinage de matériaux non métalliques, qui est réalisé sensiblement triangulaire, et comporte un corps de base (16) en forme de plaquette, symétrique par rapport à une ligne de symétrie (S), un tranchant (11) prévu sur le corps de base (16) à distance d'une face inférieure (13) du corps de base (16), et un alésage de fixation (15), la zone (12) opposée au tranchant (11) étant arrondie, **caractérisé en ce que :**
a) une rainure (14) s'étendant sensiblement perpendiculairement au tranchant (11) est formée dans la face inférieure (13),
b) l'axe longitudinal (L) de la rainure (14) coïncide avec la ligne de symétrie (S), et
c) l'arête de coupe du tranchant (11) présente une courbure convexe et le rayon de courbure (R₂) diminue dans les zones de bord opposées.
